# EUROPÄISCHE PATENTSCHRIFT

(11) **EP 2 556 940 B1**
(45) Veröffentlichungstag und Bekanntmachung des Hinweises auf die Patenterteilung: **15.07.2015**
(21) Anmeldenummer: 12179429.1
(22) Anmeldetag: 06.08.2012
(51) Int. Cl.: B29C 45/14, B32B 21/08, B32B 3/30, B60R 13/02, B29L 31/30

(54) **Verfahren zum Herstellen eines Formteils**
Method for producing a moulded part
Procédé de fabrication d'une pièce moulée

(30) Priorität: 11.08.2011 DE 202011050956 U
(43) Veröffentlichungstag der Anmeldung: 13.02.2013
(73) Patentinhaber: Novem Car Interior Design GmbH, 95519 Vorbach (DE)
(72) Erfinder: Egerer, Gerhard, 92724 Trabitz (DE); Vogler, Christian, 91278 Pottenstein (DE)
(74) Vertreter: Schlögl, Markus

(56) Entgegenhaltungen:
- EP-A1- 2 295 293
- WO-A1-2012/001146
- DE-U1-202010 005 373
- JP-A- S 591 236
- JP-A- S62 108 019

## Beschreibung

Die Erfindung betrifft ein Verfahren zum Herstellen eines Formteils. Bei dem Formteil handelt es sich insbesondere um ein als Formteil ausgebildetes Dekorteil und/oder Verkleidungsteil für einen Fahrzeuginnenraum.

Diese Formteile umfassen eine als Sichtseite ausgebildete Vorderseite und eine der Vorderseite gegenüberliegende Rückseite, einen Träger an der Rückseite des Formteils und eine Dekorschicht an der Vorderseite des Formteils.

Im Fahrzeuginnenraum werden zahlreiche als Formteil ausgebildete Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. die Abdeckungen von Bedientasten.

Die Erfindung beschäftigt sich mit Formteilen, die zusätzlich mindestens ein an oder in der Dekorschicht angeordnetes Zier- und/oder Funktionselement umfassen. Diese Zier- und/oder Funktionselemente unterscheiden sich üblicherweise vom sonstigen Design der Sichtseite, und zwar sowohl hinsichtlich ihrer Gestaltung und ihres Designs als auch hinsichtlich ihrer dreidimensionalen Form. Als Beispiele seinen Zierleisten in Chromoptik oder sonstige speziell gemusterte oder eingefärbte Bereiche der Sichtseite genannt. Auch kann es sich um Griffe oder sonstige Erhebungen handeln, die unterschiedlich zur angrenzenden Sichtseite des Formteils gestaltet sind.

Diese zusätzlichen Zier- und/oder Funktionselemente werden als Monatagetelle an das Formteil in einem nachgelagerten Arbeitsschritt nach dessen Herstellung angebracht, beispielsweise mittels Heißverstemmung oder Verklebung. Aufgrund der hierfür erforderlichen getrennten Herstellung der zusätzlichen Zier- und/oder Funktionselemente und des nachgelagerten Montageschrittes ist diese Herstellung sehr aufwändig und damit kostenintensiv.

Zum Stand der Technik wird verwiesen auf DE 20 2010 005 373 U1, WO 2012 / 001 146 A1, EP 2 295 293 A1, JP S59 1236 A, JP S62 108019 A.

Der vorliegenden Erfindung liegt die Aufgabe zugrunde, ein verbessertes Verfahren zum Herstellen von Formteilen mit zusätzlichen Zier- und/oder Funktionselementen anzugeben.

Diese Aufgabe wird durch die Merkmale des Anspruchs 1 gelöst. Vorteilhafte Ausgestaltungen und Weiterbildungen sind in den abhängigen Ansprüchen angegeben.

Das erfindungsgemäße Verfahren ist ein Verfahren zum Herstellen eines Formteils, insbesondere eines als Formteil ausgebildeten Dekorteils und/oder Verkleidungsteils für einen Fahrzeuginnenraum. Dieses herzustellende Formteil umfasst eine als Sichtseite ausgebildete Vorderseite und eine Rückseite, die vorzugsweise der Vorderseite gegenüberliegend angeordnet ist. Des Weiteren umfasst das Formteil einen Träger an der Rückseite des Formteils, eine Dekorschicht an der Vorderseite des Formteils und mindestens ein an oder in der Dekorschicht angeordnetes zusätzliches Zier- und/oder Funktionselement mit einer sichtseitigen Oberfläche an der Vorderseite des Formteils. Ferner kann das Formteil weitere Schichten aufweisen, beispielsweise eine die Dekorschicht abdeckende Schutzschicht an der Sichtseite.

Das erfindungsgemäße Verfahren weist folgende Schritte auf:
a) Bereitstellen eines Verbundpakets, insbesondere eines Schichtverbundpakets, umfassend eine zur Bildung der Dekorschicht des Formteils bestimmte Dekorlage und eine Zierfolie zur Ausbildung einer sichtseitigen Oberfläche des Zier- und/oder Funktionselements, wobei die Dekorlage des Verbundpakets mindestens einen Freibereich, insbesondere einen Durchbruch und/oder Rückversatz, aufweist, der von der Zierfolie überspannt ist. Der Freibereich ist somit ein Bereich ohne Dekorlage, d.h. im Freibereich wird die Zierfolie nicht von der Dekorlage überspannt. Die Zierfolie hingegen kann durchaus die Dekorlage im Verbundpaket teilweise oder vollflächig überspannen. Neben Dekorlage und Zierfolie kann das Verbundpaket weitere Lagen, beispielsweise eine Klebelage zwischen Dekorlage und Zierfolie und/oder Stabilisierungs- und/oder Flexibilisierungslagen zu bestimmten Dekorlagen, beispielsweise zu Holzfurnier-Dekorlagen, aufweisen. Diese können einen dem Freibereich in der Dekorlage entsprechenden Freibereich aufweisen.
b) Einlegen des Verbundpakets in eine geöffnete Kavität eines Spritzgießwerkzeugs derart, dass die Zierfolie des Verbundpakets hinterspritzt wird.
c) Schließen der Kavität.
d) Ausbilden des Zier- und/oder Funktionselements durch Einspritzen von Kunststoff in die Kavität, wobei der eingespritzte Kunststoff die Zierfolie hinterspritzt und dabei den den Freibereich überspannenden Abschnitt der Zierfolie in den Freibereich hinein und/oder durch den Freibereich hindurch drückt, wobei der in und/oder durch den Freibereich gedrückte Abschnitt der Zierfolie die sichtseitige Oberfläche des Zier- und/oder Funktionselements bildet.

Das erfindungsgemäße Verfahren ist durch folgende Schritte gekennzeichnet:
e) Vor dem Einspritzen des Kunststoffs zur Ausbildung des Zier- und/oder Funktionselements wird in einem vorgeschalteten Einspritz-Vorgang zunächst ein erster Teil des Trägers aus einem eingespritzten Trägerkunststoff ausgebildet.
f) Dabei wird der Bereich des vorgesehenen Zier- und/oder Funktionselements durch einen in diesen Bereich eingefahrenen Stempel frei von Trägerkunststoff gehalten.
g) Anschließend wird dann, vorzugsweise nach dem Aushärten und/oder Erstarren des eingespritzten Trägerkunststoffs, der Stempel aus dem Bereich des vorgesehenen Zier- und/oder Funktionselements herausgefahren.
h) Bei dem nachfolgenden Einspritzen von Kunststoff zur Ausbildung des Zier- und/oder Funktionselements wird Kunststoff in den Bereich des vorgesehenen Zier- und/oder Funktionselements in damit in einen verbliebenen Freibereich der Kavität eingespritzt und dabei ein zweiter Teil des Trägers ausgebildet.
i) Dabei hinterspritzt der eingespritzte Kunststoff die Zierfolie und drückt den den Freibereich überspannenden Abschnitt der Zierfolie in den Freibereich hinein und/oder durch den Freibereich hindurch.
j) Auf diese Weise bildet der in und/oder durch den Freibereich gedrückte Abschnitt der Zierfolie die sichtseitige Oberfläche des Zier- und/oder Funktionselements.

Die Vorteile der Erfindung liegen insbesondere darin, dass die Zier- und/oder Funktionselemente nicht als getrennte Montageteile in einem nachgelagerten Montageschritt an das bereits weitestgehend fertig hergestellte Formteil angebracht werden müssen, sondern direkt bei der Formteilherstellung ausgebildet werden. Die Herstellung der mit dem erfindungsgemäßen Verfahren hergestellten Formteile ist damit im Vergleich zu dem eingangs beschriebenen bekannten Verfahren deutlich einfacher und damit auch kostengünstiger.

Das Spritzgießwerkzeug weist typischerweise eine Oberform und eine Unterform auf, die im geschlossenen, d.h. zusammengefahrenen Zustand zwischen sich die Kavität ausbilden. An der Unterform sind typischerweise die Einspritzdüsen für den Kunststoff ausgebildet, d.h. beim Einspritzen wird das eingelegte Verbundpaket gegen die Oberform gedrückt. Das Verbundpaket wird beim erfindungsgemäßen Verfahren derart eingelegt, dass die Zierfolie des Verbundpakets der Unterform und die der Zierfolie gegenüberliegende Dekorlage der Oberform zugewandt ist.

Es kann auch vorgesehen sein, dass die geschlossene Kavität im Bereich des Freibereichs eine Form aufweist, beispielsweise einen Rückversatz oder einen Vorsprung, der der späteren Form des Zier- und/oder Funktionselements an der Sichtseite im Wesentlichen entspricht. Im Falle des vorgenannten Werkzeugbeispiels weist somit die Oberform eine derartige Form im Bereich des Freibereichs auf, gegen deren Wandung die Zierfolie durch den eingespritzten Kunststoff gedrückt wird. Nach dem Aushärten bzw. Erstarren weist somit das erzeugte Zier- und/oder Funktionselement an der Sichtseite des Formteils die Form der Kavität im Bereich des Freibereichs auf, beispielsweise die Form des Rückversatzes oder Vorsprungs. Beispielsweise lässt sich auf diese Weise ein gegenüber dem restlichen Formteil hervortretendes Zier- und/oder Funktionsteil ausbilden. Dies kann beispielsweise bei Verwendung einer entsprechenden Zierfolie und bei entsprechender Formgebung des Rückversatzung für den Betrachter aussehen wie eine an dem Formteil angebrachte Chromleiste. Es ist ebenso möglich, dass das Zier- und/oder Funktionsteil auch ohne Versatz an das restlichen Formteil anschließt oder gegenüber dem restlichen Formteil zurücktritt.

Es ist zweckmäßig, eine flexible und/oder verformbare und/oder dehnbare Zierfolie zu verwenden, die sich zerstörungsfrei durch den von der eingespritzten Kunststoffmasse ausgehenden Druck in den Frelbereich der Dekorlage hinein und/oder durch diesen hindurch drücken lässt, bis sie an der Kavitätswandung, im vorgenannten Beispiel also an der Oberform, anliegt. Hierbei wird die Zierfolie entsprechend der Form der Kavitätswandung in diesem Bereich geformt. Nach dem Aushärten bildet die in den Freibereich eingedrungene und/oder durch den Freibereich hindurch gedrungene Kunststoff-Formmasse das Zier- und/oder Funktionselement aus, das an seiner Oberfläche an der Sichtseite des Formteils von der Zierfolie überzogen ist, d.h. das grafische Design der Oberfläche, beispielsweise die Farbe, wird durch den in bzw. durch den Freibereich gedrückten Teil der Zierfolie bestimmt.

Die Zierfolie verbleibt nach der Formteilherstellung im Formteil, nicht für die Oberflächengestaltung des Zier- und/oder Funktionselements benötigte Abschnitte sind nicht sichtbar und stören daher nicht.

Bei dem erfindungsgemäßen Verfahren kann vorgesehen sein, dass beim Einspritzen des Kunststoffs in einem Schritt neben dem Zier- und/oder Funktionselement auch der Träger aus dem eingespritzten Kunststoff ausgebildet wird.

Bei dem im vorgeschalteten Einspritzvorgang eingespritzten Trägerkunststoff und bei dem im vorgenannten Verfahrensschritt d) eingespritzten Kunststoff kann es sich um gleiche oder um verschiede Kunststoffe handeln. In Betracht kommen insbesondere thermoplastische Kunststoffe.

Der Freibereich in der Dekorlage kann beispielsweise durch Lasern vor oder nach der Herstellung des Verbundpakets oder durch Ausstanzen vor der Herstellung des Verbundpakets hergestellt werden.

Die Zierfolie kann bei der Bereitstellung des Verbundpakets auf ihrer später im Formteil sichtseitigen Seite zumindest im Bereich des bereits vorhandenen oder vorgesehenen Freibereichs in der Dekorlage bedruckt sein oder werden. Alternativ oder additiv kann die Zierfolie eine transparente Folie sein, die auf ihrer im Formteil der Sichtseite des Formteils abgewandten Seite bei der Bereitstellung des Verbundpakets zumindest im Bereich des bereits vorhandenen oder vorgesehenen Freibereichs in der Dekorlage teilweise bedruckt ist oder wird. Weiter alternativ oder additiv kann die Zierfolie zumindest im Bereich des bereits vorhandenen oder vorgesehenen Freibereichs in der Dekorlage eine durchgängig eingefärbte Folie sein.

Das Verbundpaket kann vor dem Einlegen in die Kavität vorgeformt werden, beispielsweise in einem speziellen Presswerkzeug, so dass seine Form bis auf den Bereich des späteren Zier- und/oder Funktionselements zumindest im Wesentlichen einer Oberfläche der Kavität entspricht, an die das Verbundpaket beim Einlegen angelegt wird. Alternativ kann das Verbundpaket beim Einlegen in die Kavität im Wesentlichen noch flächig ausgebildet sein und/oder noch nicht einer Oberfläche der Kavität entsprechen, so dass das Verbundpaket beim Einspritzen von Kunststoff gegen die Kavitätsoberfläche gedrückt und dadurch im Wesentlichen entsprechend der Kavitätsoberfläche geformt wird. In beiden Fällen kann die Haftung zwischen den Verbundlagen teilweise oder vollständig ausgeprägt sein. Im Falle einer teilweise ausgeprägten Verbundhaftung erfolgt die endgültige Verbundhaftung über die im Spritzgießprozess auftretende Temperatur und/oder den im Spritzgießprozess auftretenden Druck.

Die Dekorlage kann beispielsweise ein Holzfurnier, eine Metalllage, eine Folie, vorzugsweise eine Kunststoff- und/oder Metallfolie, und/oder eine Carbonlage und/oder eine Lederlage bzw. Textillage bzw. ein metallisiertes Gewebe bzw. eine thermoplastische Folie bzw. ein Stoff sein oder eines oder mehrere dieser Materialien umfassen.

Für den gegebenenfalls einteiligen oder zweiteiligen oder mehrteiligen Träger können übliche Kunststoffe, insbesondere thermoplastische Kunststoffe, eingesetzt werden.

An alle vorstehend beschriebenen Verfahren können sich zur Fertigstellung der Formteile gegebenenfalls weitere Verfahrensschritte anschließen, beispielsweise eine mechanische und/oder chemische Bearbeitung der Dekoroberfläche, ein Lackieren zumindest der Dekoroberfläche, ein Zuschneiden des Formteils, ein Lackieren der Randbereiche des Formteils, um ein Eindringen von Feuchtigkeit zwischen die Lagen zu verhindern, ein Beschriften und ein Anbringen zusätzlicher Dekorelemente und/oder Halterungsteile.

Das Formteil umfasst eine als Sichtseite ausgebildete Vorderseite und eine Rückseite, die vorzugsweise der Vorderseite gegenüberliegend angeordnet ist. Ferner umfasst das Formteil einen Träger an der Rückseite des Formteils, eine Dekorschicht mit einer Dekorlage an der Vorderseite des Formteils und mindestens ein an oder in der Dekorschicht ausgebildetes zusätzliches Zier- und/oder Funktionselement mit einer sichtseitigen Oberfläche an der Vorderseite des Formteils. Das Formteil ist vorzugsweise nach dem vorstehend beschriebenen erfindungsgemäßen Verfahren hergestellt. Alle vorstehend genannten Merkmale des Formteils können auch beim hier beschriebenen Formteil verwirklicht sein. Insbesondere handelt es sich bei dem Formteil um ein als Formteil ausgebildetes Dekorteil und/oder Verkleidungsteil für einen Fahrzeuginnenraum.

Beim Formteil weist die Dekorlage einen Freibereich, insbesondere einen Durchbruch und/oder einen Rückversatz, im Bereich des Zier- und/oder Funktionselements auf. Der Träger dringt in den Freibereich hinein und/oder durch den Freibereich hindurch und bildet an der Vorderseite des Formteils das Zier- und/oder Funktionselement aus. Ferner weist die Dekorlage an ihrer der Vorderseite des Formteils abgewandten Seite teilweise oder vollflächig eine Zierfolie auf. Die Zierfolie dringt in den Freibereich hinein und/oder durch den Freibereich hindurch und überspannt an der Vorderseite des Formteils den in den Freibereich hinein und/oder durch den Freibereich hindurch dringenden Teil des Trägers und bildet damit eine sichtseitige Oberfläche des Zier- und/oder Funktionselements aus. Ferner kann das Formteil weitere Schichten aufweisen, beispielsweise eine die Dekorschicht abdeckende Schutzschicht an der Sichtseite.

Das Formteil ist dadurch gekennzeichnet, dass der Träger in einem zweistufigen Einspritzverfahren hergestellt und somit zweiteilig aus einem ersten Teil und einem zweiten Teil aufgebaut ist, wobei erster Teil und zweiter Teil aneinander gespritzt sind, und wobei der zweite Teil dem Zier- und/oder Funktionselement zugeordnet ist, das heißt im Bereich des Zier- und/oder Funktionselement an der Rückseite des Formteils angeordnet ist.

Die vorstehend zum erfindungsgemäßen Verfahren beschriebenen Vorteile gelten analog für das Formteil.

Gemäß einer Weiterbildung des Formteils kann der Träger in einem zweistufigen Einspritzverfahren hergestellt und somit zweiteilig aus einem ersten Teil und einem zweiten Teil aufgebaut sein, wobei erster Teil und zweiter Teil aneinandergespritzt sind, und wobei der zweite Teil dem Zier- und/oder Funktionselement zugeordnet ist, das heiBt im Bereich des Zier- und/oder Funktionselement an der Rückseite des Formteils angeordnet ist.

Auch kann vorgesehen sein, dass die Zierfolie auf ihrer sichtseitigen Seite im Bereich der Oberfläche des Zier- und/oder Funktionselements bedruckt ist. Alternativ oder additiv kann die Zierfolie eine transparente Folie sein, die auf ihrer der Sichtseite des Formteils abgewandten Seite im Bereich der Oberfläche des Zier- und/oder Funktionselements ganz oder teilweise bedruckt ist. Weiter kann alternativ oder additiv vorgesehen sein, dass die Zierfolie zumindest im Bereich der Oberfläche des Zier- und/oder Funktionselements eine durchgängig eingefärbte Folie ist.

Nachfolgend wird auch hinsichtlich weiterer Merkmale und Vorteile die Herstellung eines Ausführungsbeispiels eines Formteils näher beschrieben:
a) Bereitstellen eines Verbundpakets umfassend
   a1) ein Holzfurnier mit einer für die Sichtseite im Formteil vorgesehenen Vorderseite und einer der Vorderseite gegenüberliegenden Rückseite, an der eine Stabilisierungslage vorgesehen ist, wobei das Holzfurnier mit der Stabilisierungslage die Dekorlage bildet und mindestens einen Freibereich, beispielsweise einen Durchbruch oder einen seitlichen Rückversatz gegenüber der nachfolgend genannten Zierfolie, aufweist (alternativ kann auch jedes andere Dekormaterial, gegebenenfalls mit geeigneten Zusatzschichten, verwendet werden, erforderlich ist in jedem Fall mindestens ein Freibereich), und
   a2) eine Zierfolie, die über eine Klebeschicht an der Rückseite der Dekorlage angebracht ist und den Freibereich in der Dekorlage überspannt, wobei die der Dekorlage zugewandte Seite der Zierfolie zumindest im Bereich des Freibereichs bedruckt ist; alternativ oder additiv kann auch die der Dekorlage abgewandte Seite der Zierfolie zumindest im Bereich des Freibereichs bedruckt sein, und/oder die Zierfolie ist eine durchgefärbte Folie.
b) Dreidimensionales Vorformen des Verbundpakets in einem Presswerkzeug, so dass das Verbundpaket bereits weitgehend seine im fertigen Formteil vorgesehene Form aufweist; dieser Verfahrensschritt kann auch entfallen, dann wird das noch flächige Verbundpaket im nächsten Schritt in die Kavität des Spritzgießwerkzeugs eingelegt.
c) Einlegen des Verbundpakets in die geöffnete Kavität eines Spritzgießwerkzeugs umfassend eine Oberform und eine Unterform, wobei die Einspritzdüsen in der Unterform angeordnet sind; im Falle der Vorformung wird hierbei die Vorderseite des Holzfurniers an die korrespondierende Oberfläche der Oberform angelegt, im Bereich des Freibereichs verbleibt ein Hohlraum.
d) Schließen der Kavität; im Falle der Vorformung und üblicherweise auch bei flächigen Verbundpaketen entsteht an der der Unterform zugewandten Seite des Verbundpakets ein Hohlraum.
e) Für das Einspritzen gibt es zwei Verfahrensvarianten:
   e1) Entweder der Träger und das Zier- und/oder Funktionselement werden gemeinsam in einem Einspritzvorgang ausgebildet: Hierzu wird Kunststoff eingespritzt, der den Hohlraum an der Rückseite des Verbundpakets füllt und das Verbundpaket gegen die Oberform drückt und dabei gegebenenfalls verformt, an der Rückseite des Verbundpakets wird dadurch der Träger gebildet; der eingespritzte Kunststoff drückt ferner die Zierfolie in den Freibereich in der Dekorlage hinein und/oder durch diesen hindurch bis zur Oberfläche der Oberform, so dass alle Hohlräume gefüllt sind; im Bereich des Freibereichs wird dadurch das Zier- und/oder Funktionselement gebildet, dieses ist an der Oberform von der Zierfolie überzogen, dieser Abschnitt der Zierfolie bildet somit an der Sichtseite des Formteils die Oberfläche des Zier- und/oder Funktionselements.
   e2) Oder der Träger und das Zier- und/oder Funktionselement werden in zwei getrennten Einspritzvorgängen gebildet: Hierzu wird zunächst ausgehend von der Unterform ein Stempel im Bereich des Freibereichs gegen die Zierfolie gefahren, so dass beim Einspritzen in diesem Bereich kein Druck auf die Zierfolie ausgeübt wird und diese somit nicht in den Freibereich gedrückt wird; anschließend erfolgt der erste Einspritzvorgang, der Träger an der der Unterform zugewandten Seite des Verbundpakets wird ausgebildet; nach dem Aushärten bzw. Erstarren wird der Stempel zurückgezogen, und es folgt der zweite Einspritzvorgang, der nunmehr die Zierfolie durch den Hohlraum gegen die Oberform drückt und dabei das Zier- und/oder Funktionselements ausbildet, wobei auch in diesem Fall das Zier- und/oder Funktionselements an der Oberform von der Zierfolie überzogen ist und somit dieser Abschnitt der Zierfolie an der Sichtseite des Formteils die Oberfläche des Zier- und/oder Funktionselements bildet.
f) Aushärten und Auswerfen des Formteils; die Zierfolie verbleibt im Formteil; das Formteil weist nunmehr an seiner Vorderseite bzw. Sichtseite ein zwei- bzw. mehrteiliges Dekor auf umfassend die Vorderseite des Holzfurniers und die von der Zierfolie gebildete Oberfläche des Zier- und/oder Funktionselements; das Zier- und/oder Funktionselement kann hierbei auch erhaben oder zurückversetzt gegenüber der umgebenden Sichtseite ausgebildet sein, hierzu muss lediglich die Oberform im Bereich des Durchbruchs in der Dekorlage entsprechend geformt sein. Selbstverständlich ist auch ein ebener Übergang zur umgebenden Sichtseite möglich.
g) Gegebenenfalls können noch Nachbearbeitungsschritte erfolgen, beispielsweise ein Fräsen und/oder Schleifen und/oder Versiegeln; auch kann die Vorderseite bzw. Sichtseite des Formteils mit einer Schutzschicht überzogen werden.

### Anmerkung zu Schritt a):

Der Freibereich in der Dekorlage kann bereits vor der Zusammenfügung mit der Zierfolie eingebracht oder vorgesehen sein, beispielsweise mittels Stanzung. Es ist aber auch möglich, den Freibereich in der Dekorlage erst nach dem Zusammenfügen mit der Zierfolie einzubringen, beispielsweise mittels Lasern, wobei darauf zu achten ist, dass die Zierfolie nicht beschädigt wird. Die Zierfolie kann, soweit erforderlich, bereits vor dem Zusammenfügen mit der Dekorlage fertig bedruckt sein. Es ist aber auch möglich, dass die Zierfolie vor dem Zusammenfügen mit der Dekorlage noch nicht bedruckt ist und erst nach dem Zusammenfügen an ihrer der Dekorlage abgewandten Seite zumindest im Bereich des Freibereichs bedruckt wird, soweit erforderlich.

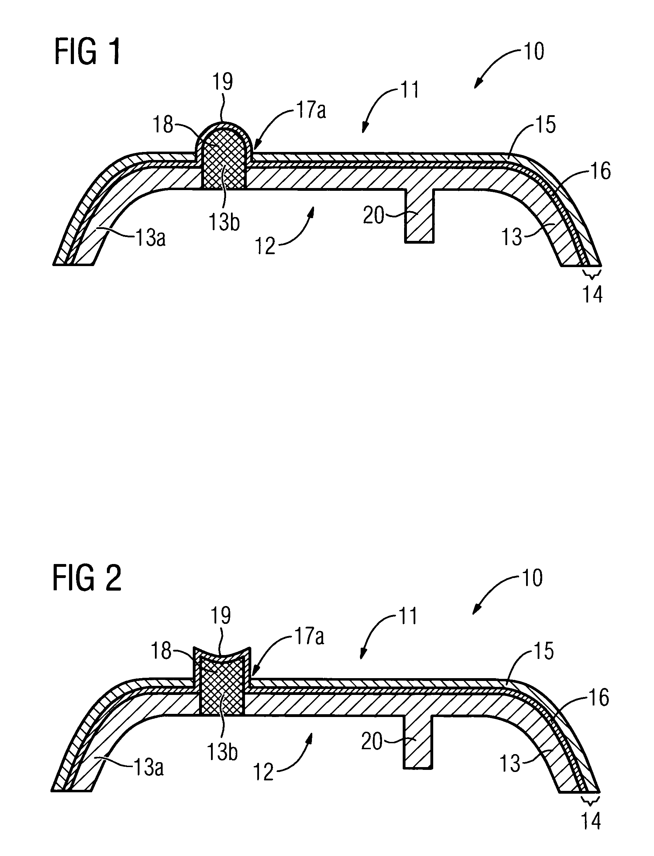

Zur Verdeutlichung der Erfindung zeigen
- FIG 1 bis FIG 5: in einer schematischen Querschnittsdarstellung verschiedene Ausführungsbeispiele von Formteilen.

Einander entsprechende Teile und Komponenten sind in FIG 1 bis FIG 5 mit den gleichen Bezugszeichen versehen.

Das in FIG 1 gezeigte Formteil 10 weist eine als Sichtseite ausgebildete Vorderseite 11 und eine der Vorderseite 11 gegenüberliegende Rückseite 12 auf. An der Rückseite 12 ist ein Träger 13, der ein schematisch dargestelltes Befestigungselement 20 ausbildet, und an der Vorderseite 11 eine Dekorschicht 14 vorgesehen. Die Dekorschicht 14 umfasst eine Dekorlage 15, beispielsweise ein Holzfurnier, und eine Zierfolie 16. Zwischen Dekorlage 15 und Zierfolie 16 können eine Klebeschicht und gegebenenfalls auch zusätzliche Lagen, beispielsweise ein Blindfurnier, vorgesehen sein (nicht dargestellt). Die Dekorlage 15 weist einen als Durchbruch 17a ausgebildeten Freibereich auf, durch den der Träger 13, und zwar konkret der nachfolgend näher erläuterte zweite Teil 13b des Trägers 13, und die Zierfolie 16 hindurch dringen und an der Vorderseite 11 des Formteils 10 ein Zier- und/oder Funktionselement 18 ausbilden.

Eine sichtseitige Oberfläche 19 des Zier- und/oder Funktionselements 18 ist von einem Abschnitt der Zierfolie 16 gebildet. Zumindest dieser Abschnitt der Zierfolie 16 kann vorder- oder rückseitig bedruckt oder auch durchgefärbt sein. Beispielsweise lässt sich auf diese Weise ein optisch gegenüber der restlichen Vorderseite herausgestelltes Zier- und/oder Funktionselement 18 herstellen, beispielsweise ein in Chromoptik erscheinendes Zier- und/oder Funktionselement 18, beispielsweise eine Zierleiste oder ein Griff.

Bei dem in FIG 1 gezeigten Formteil 10 ist der Träger 13 in einem zweistufigen Einspritzverfahren hergestellt und somit zweiteilig aus einem ersten Teil 13a und einem zweiten Teil 13b aufgebaut. Der erster Teil 13a und der zweiter Teil 13b sind dementsprechend aneinandergespritzt. Der zweite Teil 13b des Trägers 13 ist dem Zier- und/oder Funktionselement 18 zugeordnet, das heißt der zweite Teil 13b befindet sich im Bereich des Zier- und/oder Funktionselements 18 an der Rückseite 12 des Formteils 10. Der erste Teil 13a des Trägers 13 ist der Dekorlage 15 um den Freibereich 17a herum zugeordnet und befindet sich dementsprechend in diesem Bereich an der Rückseite 12 des Formteils 10.

In FIG 1 ist das Zier- und/oder Funktionselement 19 gegenüber der umgebenden Dekorschicht 14 erhaben, d.h. das Zier- und/oder Funktionselement 19 steht hervor. Die sichtseitige Oberfläche 19 des Zier- und/oder Funktionselements 18 ist konvex gekrümmt.

Im Unterschied hierzu zeigt FIG 2 ein ansonsten identisches Formteil 10, bei dem die sichtseitige Oberfläche 19 des Zier- und/oder Funktionselements 18 zwar ebenfalls hervorsteht, jedoch konkav gekrümmt ist.

Alternativ zur erhabenen Ausbildung des Zier- und/oder Funktionselements 18 in FIG 1 und FIG 2 kann das Zier- und/oder Funktionselement 18 auch gegenüber der umgebenden Dekorlage 15 zurückversetzt ausgebildet sein. In diesem Fall dringt der Träger 13 und die Zierfolie 16 nicht durch den Durchbruch 17a hindurch, sondern lediglich in diesen hinein.

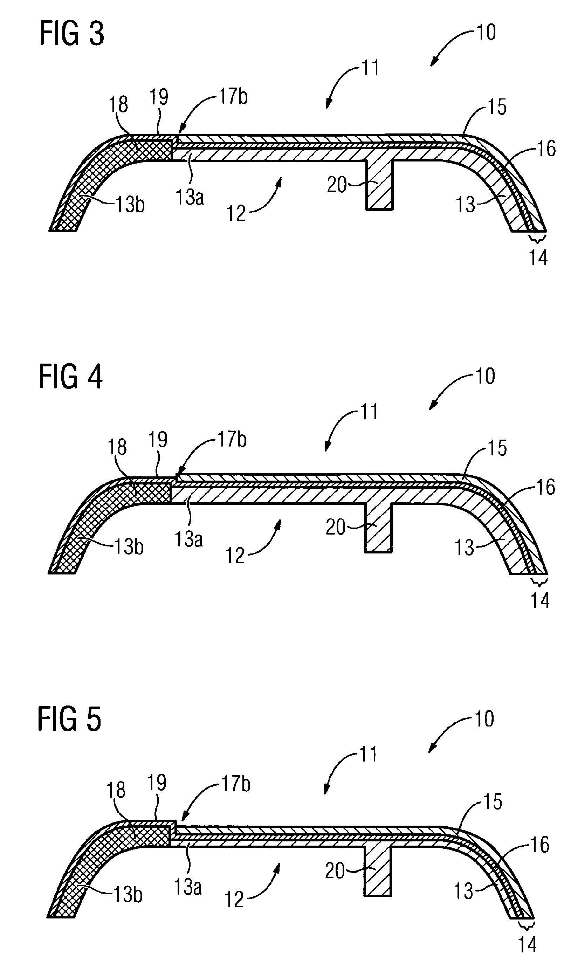

Die Ausführungsbeispiele gemäß FIG 3 bis FIG 5 sind hinsichtlich ihres grundsätzlichen Aufbaus vergleichbar zu den in FIG 1 und FIG 2 gezeigten Beispielen aufgebaut, so dass nachfolgend lediglich auf die Unterschiede eingegangen wird. Zentraler Unterschied ist, dass der Freibereich in FIG 3 bis FIG 5 nicht als Durchbruch 17a, sondern als Rückversatz 17b ausgebildet ist. Unter Durchbruch 17a wird hierbei ein Freibereich verstanden, der in Draufsicht vollständig von der Dekorlage 15 umgeben ist. Unter Rückversatz 17b wird hingegen ein seitliches Zurücktreten der Dekorlage 15 gegenüber der Zierfolie 16 verstanden, d.h. der Rückversatz 17b ist nicht vollständig von der Dekorlage 15 umgeben.

Für den Rückversatz 17b gilt analog zum Durchbruch 17a: Der zweite Teil 13b des Trägers 13 und die Zierfolie 16 dingen in den Rückversatz 17b in der Dekorlage 15 ein oder durch diesen hindurch und bilden an der Vorderseite 11 des Formteils 10 ein Zier- und/oder Funktionselement 18 aus. Eine sichtseitige Oberfläche 19 des Zier- und/oder Funktionselements 18 ist wiederum von einem Abschnitt der Zierfolie 16 gebildet, zumindest dieser Abschnitt der Zierfolie 16 kann vorder- oder rückseitig bedruckt oder auch durchgefärbt sein. Auch hier lässt sich beispielsweise ein optisch gegenüber der restlichen Vorderseite herausgestelltes Zier- und/oder Funktionselement 18 herstellen, das in diesem Fall an einem Randbereich des Formteils 10 angeordnet ist. Auch hierbei kann es sich um ein in Chromoptik erscheinendes Zier- und/oder Funktionselement 18, beispielsweise eine Zierleiste, handeln.

Die Ausführungsbeispiele in FIG 3 bis FIG 5 unterscheiden sich in der relativen Ausbildung des jeweiligen Zier- und/oder Funktionselements 18 in Relation zur angrenzenden Dekorlage 15. In FIG 3 grenzt die Sichtseite der Dekorlage 15 eben an die sichtseitige Oberfläche 19 des Zier- und/oder Funktionselements 18 an, in FIG 4 ist die sichtseitige Oberfläche 19 des Zier- und/oder Funktionselements 18 gegenüber der Sichtseite der Dekorlage 15 zurückversetzt und in FIG 5 steht sie gegenüber der Sichtseite der Dekorlage 15 hervor.

Die in FIG 3 bis 5 gezeigten Beispiele können selbstverständlich hinsichtlich der Form der sichtseitigen Oberfläche 19 und damit des Zier- und/oder Funktionselements 18 insgesamt abgewandelt ausgebildet sein, beispielsweise ist auch hier eine konvexe oder konkave Formgebung wie in FIG 1 bzw. FIG 2 gezeigt möglich.

In allen gezeigten Beispielen überspannt die Zierfolie 16 vollflächig die Dekorlage 15. Alternativ ist es aber generell auch möglich, dass die Zierfolie 16 die Dekorlage 15 lediglich teilweise überspannt, insbesondere lediglich in Bereichen, die an den Freibereich 17a bzw. 17b angrenzen.

In den Ausführungsbeispielen nach FIG 1 bis FIG 5 kann der Träger alternativ zur zweiteiligen Ausbildung auch nur einteilig ausgebildet sein, beispielsweise indem der Träger in einem einstufigen Einspritzverfahren hergestellt ist. In diesem Fall kann beim Einspritzen des Kunststoffs in einem Schritt neben dem Zier- und/oder Funktionselement auch der Träger aus dem eingespritzten Kunststoff ausgebildet werden.

### Bezugszeichenliste

- 10: Formteil
- 11: Vorderseite
- 12: Rückseite
- 13: Träger
- 13a: Erster Teil des Trägers 13
- 13b: Zweiter Teil des Trägers 13
- 14: Dekorschicht
- 15: Dekorlage
- 16: Zierfolie
- 17a: Freibereich, Durchbruch
- 17b: Freibereich, Rückversatz
- 18: Zier- und/oder Funktionselement
- 19: Sichtseitige Oberfläche des Zier- und/oder Funktionselements 18
- 20: Befestigungselement

## Patentansprüche

1. Verfahren zum Herstellen eines Formteils (10), insbesondere eines als Formteil (10) ausgebildeten Dekorteils und/oder Verkleidungsteils für einen Fahrzeuginnenraum, umfassend eine als Sichtseite ausgebildete Vorderseite (11) und eine Rückseite (12),
einen Träger (13) an der Rückseite (12) des Formteils (10),
eine Dekorschicht (14) an der Vorderseite (11) des Formteils (10), und
mindestens ein an oder in der Dekorschicht (14) angeordnetes zusätzliches Zier- und/oder Funktionselement (18) mit einer sichtseitigen Oberfläche (19) an der Vorderseite des Formteils (10),
**welches folgende Schritte aufweist:**
a) Bereitstellen eines Verbundpakets umfassend eine zur Bildung der Dekorschicht (14) des Formteils (10) bestimmte Dekorlage (15) und eine Zierfolie (16) zur Ausbildung einer sichtseitigen Oberfläche (19) der Zier- und/oder Funktionselemente (18), wobei die Dekorlage (15) des Verbundpakets mindestens einen Freibereich (17a, 17b), insbesondere einen Durchbruch (17a) und/oder einen Rückversatz (17b), aufweist, der von der Zierfolie (16) überspannt ist;
b) Einlegen des Verbundpakets in eine geöffnete Kavität eines Spritzgleßwerkzeugs derart, dass die Zierfolie (16) des Verbundpakets hinterspritzt wird;
c) Schließen der Kavität;
d) Ausbilden des Zier- und/oder Funktionselements (18) durch Einspritzen von Kunststoff in die Kavität, wobei der eingespritzte Kunststoff die Zierfolie (16) hinterspritzt und dabei den den Freibereich (17a, 17b) überspannenden Abschnitt der Zierfolie in den Freibereich (17a, 17b) hinein und/oder durch den Freibereich (17a, 17b) hindurch drückt, wobei der in und/oder durch den Freibereich (17a, 17b) gedrückte Abschnitt der Zierfolie (16) die sichtseitige Oberfläche (19) des Zier- und/oder Funktionselements (18) bildet, **dadurch gekennzeichnet,dass**
e) vor dem Einspritzen des Kunststoffs zur Ausbildung des Zier- und/oder Funktionselements (18) in einem vorgeschalteten Einspritzvorgang zunächst ein erster Teil (13a) des Trägers (13) aus einem eingespritzten Trägerkunststoff ausgebildet wird,
f) wobei der Bereich des vorgesehenen Zier- und/oder Funktionselements (18) durch einen in diesen Bereich eingefahrenen Stempel frei von Trägerkunststoff gehalten wird,
g) anschließend der Stempel aus dem Bereich des vorgesehenen Zier- und/oder Funktionselements (18) herausgefahren wird, und
h) bei dem nachfolgenden Einspritzen von Kunststoff zur Ausbildung des Zier- und/oder Funktionselements (18) Kunststoff in den Bereich des vorgesehenen Zier- und/oder Funktionselements (18) eingespritzt wird und dabei einen zweiten Teil (13b) des Trägers (13) ausbildet,
i) wobei der eingespritzte Kunststoff die Zierfolie (16) hinterspritzt und dabei den den Freibereich (17a, 17b) überspannenden Abschnitt der Zierfolie in den Freibereich (17a, 17b) hinein und/oder durch den Freibereich (17a, 17b) hindurch drückt, und
j) wobei der in und/oder durch den Freibereich (17a, 17b) gedrückte Abschnitt der Zierfolie (16) die sichtseitige Oberfläche (19) des Zier- und/oder Funktionselements (18) bildet.

2. Verfahren nach Anspruch 1,
**dadurch gekennzeichnet,**
**dass** der Freibereich (17a, 17b) in der Dekorlage (15) durch Lasern vor oder nach der Herstellung des Verbundpakets hergestellt wird.

3. Verfahren nach Anspruch 1,
**dadurch gekennzeichnet,**
**dass** der Freibereich (17a, 17b) in der Dekorlage (15) durch Ausstanzen vor der Herstellung des Verbundpakets hergestellt wird.

4. Verfahren nach einem der vorhergehenden Ansprüche,
**dadurch gekennzeichnet,**
**dass** die Zierfolie (16) bei der Bereitstellung des Verbundpakets auf ihrer später im Formteil (10) sichtseitigen Seite zumindest im Bereich des bereits vorhandenen oder vorgesehenen Freibereichs (17a, 17b) in der Dekorlage (15) bedruckt ist oder wird.

5. Verfahren nach einem der vorhergehenden Ansprüche,
**dadurch gekennzeichnet,**
**dass** die Zierfolie (16) eine transparente Folie ist, die auf ihrer im Formteil (10) der Sichtseite des Formteils (10) abgewandten Seite bei der Bereitstellung des Verbundpakets zumindest im Bereich des bereits vorhandenen oder vorgesehenen Freibereichs (17a, 17b) in der Dekorlage (15) ganz oder teilweise bedruckt ist oder wird.

6. Verfahren nach einem der vorhergehenden Ansprüche,
**dadurch gekennzeichnet,**
**dass** die Zierfolie (16) zumindest im Bereich des bereits vorhandenen oder vorgesehenen Freibereichs (17a, 17b) in der Dekorlage (15) eine durchgängig eingefärbte Folie ist.

7. Verfahren nach einem der vorhergehenden Ansprüche,
**dadurch gekennzeichnet,**
**dass** das Verbundpaket vor dem Einlegen in die Kavität vorgeformt wird, so dass seine Form bis auf den Bereich des späteren Zier- und/oder Funktionselements (18) einer Oberfläche der Kavität entspricht, an die das Verbundpaket beim Einlegen angelegt wird.

8. Verfahren nach einem der Ansprüche 1 bis 6,
**dadurch gekennzeichnet,**
**dass** das Verbundpaket beim Einlegen in die Kavität im Wesentlichen flächig ausgebildet ist und/oder noch nicht einer Oberfläche der Kavität entspricht, so dass das Verbundpaket beim Einspritzen von Kunststoff gegen die Kavitätsoberfläche gedrückt und dadurch im Wesentlichen entsprechend der Kavitätsoberfläche geformt wird.

## Claims

1. Method for producing a moulded part (10), in particular a decorative part and/or a trim part formed as a moulded part (10) for a vehicle interior, comprising a front side (11), formed as a visible side, and a rear side (12),
a carrier (13) on the rear side (12) of the moulded part (10),
a decorative layer (14) on the front side (11) of the moulded part (10), and
at least one additional decorative and/or functional element (18), arranged on or in the decorative layer (14) and having a visible-side surface (19) on the front side of the moulded part (10), which has the following steps:
a) providing a composite assembly comprising a decorative ply (15), intended for forming the decorative layer (14) of the moulded part (10), and a decorative film (16) for forming a visible-side surface (19) of the decorative and/or functional element (18), wherein the decorative ply (15) of the composite assembly has at least one clear region (17a, 17b), in particular an aperture (17a) and/or a rear offset (17b), which is spanned by the decorative film (16);
b) placing the composite assembly into an open cavity of an injection-moulding tool in such a way that the decorative film (16) of the composite assembly is moulded as an insert;
c) closing the cavity;
d) forming the decorative and functional element (18) by injecting polymer into the cavity, wherein the injected polymer moulds the decorative film (16) as an insert and thereby forces the portion of protective film that is spanning the clear region (17a, 17b) into the clear region (17a, 17b) and/or through the clear region (17a, 17b), wherein the portion of the decorative film (16) that has been forced into and/or through the clear region (17a, 17b) forms the visible-side surface (19) of the decorative and functional element (18),
**characterized in that**
e) before the injection of the polymer to form the decorative and/or functional element (18), first a first part (13a) of the carrier (13) is formed from an injected carrier polymer in a preceding injecting operation,
f) wherein the region of the intended decorative and/or functional element (18) is kept free from carrier polymer by a die moved into this region,
g) the die is subsequently moved out of the region of the intended decorative and functional element (18), and
h) in the subsequent injection of polymer to form the decorative and/or functional element (18), polymer is injected into the region of the intended decorative and/or functional element (18) and thereby forms a second part (13b) of the carrier (13),
i) wherein the injected polymer moulds the decorative film (16) as an insert and thereby forces the portion of the decorative film that is spanning the clear region (17a, 17b) into the clear region (17a, 17b) and/or through the clear region (17a, 17b), and
j) wherein the portion of the decorative film (16) that has been forced into or through the clear region (17a, 17b) forms the visible-side surface (19) of the decorative and/or functional element (18).

2. Method according to Claim 1,
**characterized**
**in that** the clear region (17a, 17b) is produced in the decorative ply (15) by lasering before or after the production of the composite assembly.

3. Method according to Claim 1,
**characterized**
**in that** the clear region (17a, 17b) is produced in the decorative ply (15) by punching out before the production of the composite assembly.

4. Method according to one of the preceding claims, **characterized in that**, in the preparation of the composite assembly, the decorative film (16) has an imprint or is provided with an imprint on its side that is later on the visible side in the moulded part (10), at least in the region of the already existing or intended clear region (17a, 17b) in the decorative ply (15).

5. Method according to one of the preceding claims,
**characterized**
**in that** the decorative film (16) is a transparent film which, in the preparation of the composite assembly, has an imprint or is provided with an imprint fully or partially on its side in the moulded part (10) that is facing away from the visible side of the moulded part (10), at least in the region of the already existing or intended clear region (17a, 17b) in the decorative ply (15).

6. Method according to one of the preceding claims,
**characterized**
**in that** the decorative film (16) is a film that is coloured throughout, at least in the region of the already existing or intended clear region (17a, 17b) in the decorative ply (15).

7. Method according to one of the preceding claims,
**characterized**
**in that**, before being placed into the cavity, the composite assembly is preformed, so that, apart from the region of the later decorative and/or functional element (18), its shape corresponds to a surface of the cavity onto which the composite package is laid when it is placed in.

8. Method according to one of Claims 1 to 6,
**characterized**
**in that**, when it is being placed into the cavity, the composite assembly is of a substantially flat form and/or does not yet correspond to a surface of the cavity, so that the composite assembly is pressed against the surface of the cavity when the polymer is injected, and as a result is moulded to correspond substantially to the surface of the cavity.

## Revendications

1. Procédé de fabrication d'une pièce moulée (10), notamment d'une pièce de décor et/ou d'habillage pour l'habitacle d'un véhicule, comprenant une face avant (11) conçue comme face destinée à être visible et une face arrière (12),
un support (13) sur la face arrière (12) de la pièce moulée (10),
une couche décorative (14) sur la face avant (11) de la pièce moulée (10), et
au moins un élément décoratif et/ou fonctionnel supplémentaire (18) disposé sur ou dans la couche décorative (14) avec une surface destinée à être visible (19) sur la face avant de la pièce moulée (10), lequel procédé comprend les étapes suivantes :
a) mettre à disposition un ensemble composé de feuilles comprenant une feuille décorative (15) destinée à la formation de la couche décorative (14) de la pièce moulée (10) et un film décoratif (16) pour la formation d'une surface destinée à être visible (19) de l'élément décoratif et/ou fonctionnel (18), la feuille décorative (15) de l'ensemble composé de feuilles comprenant au moins une zone libre (17a, 17b), notamment une ouverture de passage (17a) et/ou une partie arrière décalée (17b) recouverte par le film décoratif (16) ;
b) déposer l'ensemble composé de feuilles dans une cavité ouverte d'un outil de moulage par injection de façon que le film décoratif (16) de l'ensemble composé de feuilles reçoive la matière plastique du côté dorsal;
c) fermer la cavité ;
d) former l'élément décoratif et/ou fonctionnel (18) par injection de matière plastique dans la cavité, la matière plastique étant injectée du côté dorsal du film décoratif de l'ensemble composé de feuilles et pressant la partie du film décoratif qui recouvre la zone libre (17a, 17b), de façon à la faire pénétrer dans la zone libre (17a, 17b) et/ou à faire traverser la zone libre (17a, 17b), la partie du film décoratif (16) ayant pénétré et/ou traversé la zone libre (17a, 17b) formant la surface destinée à être visible (19) de l'élément décoratif et/ou fonctionnel (18),
**caractérisé en ce que**,
e) avant l'injection de la matière plastique pour former l'élément décoratif et/ou fonctionnel (18), une première partie (13a) du support (13) est d'abord formée, dans une injection préalable, en une matière plastique support,
f) la zone prévue comme zone libre de l'élément décoratif et/ou fonctionnel (18) étant gardée libre de matière plastique à l'aide d'un piston avancé dans cette zone,
g) le piston est ensuite retiré de la zone de l'élément décoratif et/ou fonctionnel (18), et
h) lors de l'injection qui suit pour former l'élément décoratif et/ou fonctionnel, de la matière plastique est injectée dans la zone de l'élément décoratif et/ou fonctionnel prévu (18) et forme une seconde partie (13b) du support (13),
i) la matière plastique injectée arrivant du côté dorsal du film décoratif (16) et pressant la partie du film décoratif qui recouvre la zone libre (17a, 17b), de façon à la faire pénétrer dans la zone libre (17a, 17b) et/ou à traverser la zone libre (17a, 17b), et
j) la partie du film décoratif (16) ayant été pressé dans et/ou à travers la zone libre (17a, 17b), formant la surface destinée à être visible (19) de l'élément décoratif et/ou fonctionnel (18).

2. Procédé selon la revendication 1, **caractérisé en ce que** la zone libre (17a, 17b) dans la feuille décorative (15) est réalisée par application d'un laser avant ou après la réalisation de l'ensemble composé de feuilles.

3. Procédé selon la revendication 1, **caractérisé en ce que** la zone libre (17a, 17b) dans la feuille décorative (15) est réalisée par poinçonnage avant la réalisation de l'ensemble composé de feuilles.

4. Procédé selon l'une des revendications précédentes, **caractérisé en ce que** le film décoratif (16), au moment de la mise à disposition de l'ensemble composé de feuilles, est imprimé, ou le sera, entièrement ou partiellement, sur le côté destiné à être visible plus tard dans la pièce moulée (10), au moins aux alentours de la zone libre (17a, 17b) existante ou prévue dans la feuille décorative (15).

5. Procédé selon l'une des revendications précédentes, **caractérisé en ce que** le film décoratif (16) est un film transparent qui est imprimé, ou le sera, entièrement ou partiellement, sur le côté qui, dans la pièce moulée (10), est opposé à la face visible de la pièce moulée (10), au moins aux alentours de la zone libre (17a, 17b) existante ou prévue dans la feuille décorative (15).

6. Procédé selon l'une des revendications précédentes, **caractérisé en ce que** le film décoratif (16) est au moins aux alentours de la zone libre (17a, 17b) existante ou prévue dans la feuille décorative (15), un film teinté de manière continue.

7. Procédé selon l'une des revendications précédentes, **caractérisé en ce que** l'ensemble composé de feuilles est préformé avant d'être déposé dans la cavité, de façon que sa forme corresponde, à l'exception des alentours du futur élément décoratif et/ou fonctionnel (18), à une surface de la cavité sur laquelle l'ensemble composé de feuilles est déposé lors de son introduction.

8. Procédé selon l'une quelconque des revendications 1 à 6, **caractérisé en ce que** l'ensemble composé de feuilles présente, lors de son dépôt dans la cavité, essentiellement une forme plate et/ou non encore correspondante à une surface de la cavité, de façon que l'ensemble composé de feuilles soit pressé, lors de l'injection de matière plastique, contre la surface de la cavité et soit formé par cela essentiellement selon la surface de la cavité.
